# EUROPÄISCHE PATENTSCHRIFT

(11) **EP 1 170 523 B1**
(45) Veröffentlichungstag und Bekanntmachung des Hinweises auf die Patenterteilung: **22.10.2003**
(21) Anmeldenummer: 01111478.2
(22) Anmeldetag: 11.05.2001
(51) Int. Cl.: F16F 9/48, F16F 9/58, F16F 9/32

(54) **Stossdämpfer**
Shock absorber
Amortisseur de chocs

(30) Priorität: 14.06.2000 DE 10028586
(43) Veröffentlichungstag der Anmeldung: 09.01.2002
(73) Patentinhaber: Weforma GmbH, 52224 Stolberg (DE)
(72) Erfinder: Schmidt, Armin, 52224 Stolberg (DE)
(74) Vertreter: Bauer, Dirk, Dipl.-Ing. Dipl.-Kfm.

(56) Entgegenhaltungen:
- GB-A- 1 358 691
- US-A- 3 201 110
- US-A- 3 726 368
- US-A- 3 840 097
- US-A- 4 113 113
- US-A- 4 690 255

## Beschreibung

Die Erfindung betrifft einen Stoßdämpfer mit einem Gehäuse, in dem ein Kolben axial verschiebbar gelagert und mit einer Kolbenstange verbunden ist, die abgedichtet durch eine Stirnseite des Gehäuses nach außen geführt und an ihrem dem Kolben abgewandten Ende mit einem Anschlagelement versehen ist, gegen das eine abzubremsende Last anschlägt, wodurch der Kolben infolge seiner Verschiebung eine Hydraulikflüssigkeit unter Drosselwirkung verdrängt, wobei der Stoßdämpfer Stirnseitig an dem Gehäuse einen Einstellring aufweist. Ein solcher Stoßdämpfer ist aus der US-A-3 840 097 bekannt.

Bei einem anderen allgemein bekannten Stoßdämpfer wird das Stützelement von einem stirnseitig aus dem Gehäuse austretenden Einstellring gebildet, mit dem die Dämpfungskonstante des Stoßdämpfers durch eine Verdrehung des Einstellrings verändert werden kann. Der Einstellring ist zu diesem Zweck drehmomentfest mit einer Einstellhülse verbunden, innerhalb der sich eine sogenannte Druckhülse befindet, in deren Innenraum sich der Kolben axial bewegt. Die Druckhülse ist mit Drosselbohrungen versehen, und der wirksame Querschnitt dieser Drosselbohrungen wird durch Verdrehung der Einstellhülse, d.h. durch Drehung des stirnseitig an dem Gehäuse befindlichen Einstellrings, verändert.

Ein Nachteil des bekannten Dämpfers ist darin zu sehen, daß beim Auffahren sehr großer Lasten nach Ausschöpfung des maximal zulässigen Kolbenhubs sehr große Kräfte in den Gehäuseboden oder in das Stützelement, d.h. den Einstellring, eingeleitet werden. Dieser kann hierdurch u.U. derart stark beansprucht werden, daß plastische Verformungen an ihm bzw. an Übertragungsteilen innerhalb des Dämpfergehäuses auftreten, so daß die Einstellbarkeit des Stoßdämpfers beeinträchtigt oder gar unmöglich gemacht wird.

Der Erfindung liegt die Aufgabe zugrunde, einen Stoßdämpfer vorzuschlagen, bei dem ein stirnseitig angeordneter Einstellring durch eine auffahrende Last, die eine Überschreitung des maximal zulässigen Kolbenhubs zur Folge hätte, nicht durch das auftreffende Anschlagelement beschädigt wird.

Ausgehend von einem Stoßdämpfer der eingangs beschriebenen Art, wird diese Aufgabe erfindungsgemäß durch die Merkmale des kennzeichnenden Teils von Anspruch 1 gelöst.

Bei dem erfindungsgemäßen Stoßdämpfer findet somit im Falle des Auffahrens einer großen Last eine Krafteinleitung unmittelbar von dem Anschlagelement in das Gehäuse selbst statt, so daß eine Gefährdung insbesondere eines drehbeweglichen Einstellrings ausgeschlossen ist. Der Festanschlag des Anschlagelements an das Gehäuse erlaubt eine besonders große Kraftübertragung, ohne daß Bauteilbeschädigungen oder Funktionsstörungen zu befürchten wären.

Eine Ausgestaltung des erfindungsgemäßen Stoßdämpfers besteht darin, daß das Anschlagelement eine topfförmige Anschlagkappe ist, die mit einer äußeren ringförmigen Stirnfläche an eine entsprechende ringförmige Stirnfläche des Gehäuses anschlägt. Hierdurch wird eine großflächige Krafteinleitung erzielt und die Flächenpressung entsprechend niedrig gehalten.

Vorzugsweise entspricht dabei der Außendurchmesser der Anschlagkappe dem Außendurchmesser des Gehäuses im Bereich eines der Anschlagkappe zugewandten Endrings.

Eine Weiterbildung der Erfindung besteht darin, daß der Innendurchmesser der Anschlagkappe dem Innendurchmesser des Gehäuses im Bereich eines Speicherraums entspricht. Der Speicherraum befindet sich in diesem Fall an der Rückseite des Kolbens in einem Ringraum, der sich zwischen der inneren Mantelfläche des Gehäuses und einer äußeren Mantelfläche einer Führungshülse befindet. Die Führungshülse führt und dichtet mit einer zentralen Bohrung die Kolbenstange ab und stützt sich außenseitig mit ihrer Mantelfläche dichtend an der inneren Mantelfläche des Gehäuses ab, um somit zugleich den Speicherraum stirnseitig zu dem Äußeren des Stoßdämpfers hin zu begrenzen.

Die Erfindung weiter ausgestaltend, ist vorgesehen, daß die Anschlagkappe in einer Anschlagstellung einen stirnseitig an dem Gehäuse vorstehenden Einstellring aufnimmt, mit dem die Dämpfungskonstante des Stoßdämpfers einstellbar ist. Obwohl der stirnseitig vorstehende Einstellring das sich in Axialrichtung des Stoßdämpfers am weitesten erstreckende Bauteil ist, wird dieser beim Anschlag der Anschlagkappe gegen die Stützfläche des Gehäuses keinerlei Kraftwirkung ausgesetzt. Der Vorteil einer sehr einfachen stirnseitigen Einstellmöglichkeit bleibt bei dieser Ausführungsform vollständig erhalten.

Eine Weiterbildung des erfindungsgemäßen Stoßdämpfers besteht ferner noch darin, daß die Anschlagkappe stirnseitig mit der Kolbenstange verschraubt ist und eine Rückstellfeder einerseits abstützt, die andererseits an einer Stirnseite des Gehäuses anliegt und die Kolbenstange von der Anschlagstellung in eine Dämpfungsstellung zurückstellt.

Die Anschlagkappe nimmt in ihrer Anschlagstellung die komprimierte Rückstellfeder auf. Vorzugsweise ist dabei der Außendurchmesser der schraubenförmigen Rückstellfeder kleiner als der Innendurchmesser des Einstellrings.

Schließlich ist gemäß der Erfindung noch vorgesehen, daß der Einstellring verdrehfest mit einer Lagerhülse verbunden ist, über die der wirksame Drosselquerschnitt mindestens einer in einem Rohr befindlichen Drosselöffnung einstellbar ist.

Die Erfindung wird nachfolgend anhand eines Ausführungsbeispiels eines Stoßdämpfers, der in der Zeichnung dargestellt ist, näher erläutert. Es zeigt:
- Fig. 1: eine perspektivische Ansicht eines Stoßdämpfers im ausgefahrenen Zustand der Kolbenstange, teilweise im Schnitt;
- Fig. 2: eine Seitenansicht des Stoßdämpfers gemäß Fig. 1, teilweise im Schnitt;
- Fig. 3: wie Fig. 1, jedoch in vollständig eingefahrenem Zustand der Kolbenstange, und
- Fig. 4: wie Fig. 2, jedoch in vollständig eingefahrenem Zustand der Kolbenstange, teilweise im Schnitt.

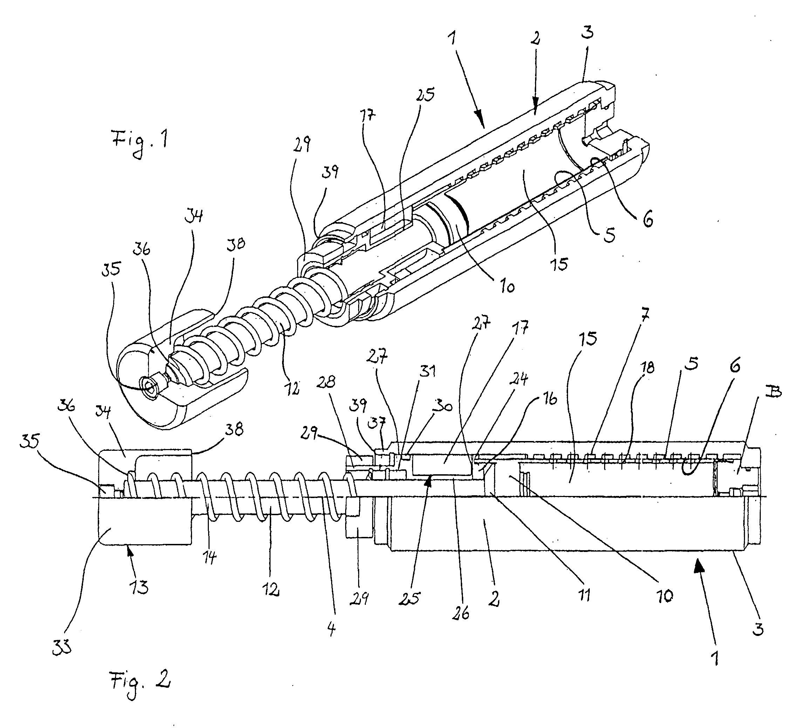

Ein in den Fig. 1 bis 4 dargestellter Stoßdämpfer 1 besitzt ein rohrförmiges Gehäuse 2, dessen äußere Mantelfläche 3 durchgängig mit einem Außengewinde zur Befestigung des Stoßdämpfers 1 an einem Haltebauteil versehen ist. In dem Gehäuse 2 ist koaxial zu dessen Längsachse 4 ein hülsenförmiges und an beiden Stirnseiten offenes Druckrohr 5 angeordnet, das alternativ zu der gezeigten Ausführung auch an einer Stirnseite geschlossen sein kann, wobei diese Stirnseite im letztgenannten Fall gleichzeitig die Stirnseite des Gehäuses 2 bildet.

In einer inneren Mantelfläche 6 des Gehäuses 2 befindet sich eine wendelförmige Nut 7, die sich in axiale Richtung über einen Abschnitt 8 des Gehäuses 2 erstreckt und einen rechteckförmigen bzw. leicht trapezförmigen Querschnitt besitzt. Der Innendurchmesser des Gehäuses 2 im Bereich der zwischen jeweils zwei Nutwindungen befindlichen Stege 9, d.h. der Innendurchmesser des Gehäuses vor der Einbringung der Nut 7, entspricht dem Außendurchmesser des Druckrohres 5. Es handelt sich hierbei um eine sehr enge Spielpassung der beiden vorgenannten Bauteile, die einen Durchtritt von Hydraulikflüssigkeit durch den Spalt zwischen Druckrohr 5 und Mantelfläche 6 des Gehäuses im wesentlichen vollständig verhindert.

Innerhalb des Druckrohres 5 ist ein in axiale Richtung verschiebbar und dichtend eingepaßter Kolben 10 gelagert, der über eine Kolbenaufnahme 11 mit einer Kolbenstange 12 verbunden ist, die wiederum stirnseitig abgedichtet aus dem Gehäuse 2 herausgeführt ist. An der dem Kolben 10 gegenüberliegenden Ende der Kolbenstange 12 befindet sich eine Anschlagkappe 13, die den maximalen Einfahrweg des Kolbens 10 begrenzt, um eine Stauchung der Kolbenstange 12 zu verhindern, wenn eine zu große Last auf den Stoßdämpfer auffährt und somit die Dämpfungswirkung über den Maximalhub des Kolbens nicht ausreichend ist. Zwischen der Anschlagkappe 13 und der dieser zugewandten Stirnseite des Gehäuses 2 befindet sich eine um die Kolbenstange 12 herum angeordnete und von dieser abgestützte Rückstellfeder 14, die für ein selbsttätiges Ausfahren der Kolbenstange 12 aus dem Gehäuse 2 sorgt, nachdem die auf den Stoßdämpfer 1 aufgelaufene Last wieder entfernt ist.

Die Funktion dieser Anschlagkappe 13 wird später noch näher erläutert.

Zwischen dem Kolben 10 und einem das Gehäuse 2 stirnseitig verschließenden Bodenteil B befindet sich ein Druckraum 15. Auf der gegenüberliegenden Seite des Kolbens 10 befindet sich ein ringförmiger, die Kolbenstange 12 umgebender Aufnahmeraum 16, an den sich in Richtung auf die Anschlagkappe 13 ein ebenfalls ringförmiger Speicherraum 17 anschließt. Während der Speicherraum 17 im Bereich der Stirnseite des Gehäuses 2 nach außen hin abgedichtet ist, steht er mit dem Aufnahmeraum 16 in Strömungsverbindung. Der Speicherraum 17 ist mit einem schaumartigen Kunststoffmaterial gefüllt, dessen abgeschlossene Poren komprimierbar sind.

Das Druckrohr 5 ist mit neun linear und äquidistant hintereinander angeordneten Drosselöffnungen 18 versehen, die seine Wandung durchdringen. Außerdem weist das Druckrohr 5 an seinem äußeren Mantel 19 zwei um 180° zueinander versetzt angeordnete und sich über die gesamte axiale Länge des Druckrohres 5 erstreckende Abflachungen auf, die einen möglichst ungedrosselten Rückfluß der Hydraulikflüssigkeit in axiale Richtung ermöglichen sollen. An einer Stirnseite 21 ist das Druckrohr 5 mit zwei ebenfalls um 180° versetzt zueinander angeordneten Mitnehmerzapfen 22 versehen, die in bezug auf die Abflachungen jeweils ungefähr um 90° versetzt angeordnet sind. Diese Mitnehmer greifen formschlüssig in die Lagerhülse 25 ein, die drehbar in dem Gehäuse 2 gelagert ist.

Auf der gegenüberliegenden Stirnseite 23 des Druckrohres 5 ist in diese ein Bodenteil B eingeschraubt und verdrehfest gesichert, um auch auf dieser Seite des Gehäuses 2, beispielsweise über eine nach außen offene Sechskantöffnung oder einen Schlitz, eine Einstellung des Stoßdämpfers von außen zu ermöglichen

Die Lagerhülse 25 führt mit der Mantelfläche 26 einer zentrischen Bohrung die Kolbenstange 12. Mit ihrer äußeren Mantelfläche 27 stützt sich die Lagerhülse 25 an der inneren Mantelfläche des Gehäuses 2 in dem zugeordneten Abschnitt ab. Ein Einstellkragen 28 der Lagerhülse 25 erstreckt sich in axiale Richtung aus dem Gehäuse 2 des Stoßdämpfers 1 heraus und ist verdrehfest mit einem Einstellring 29 versehen. Eine Verdrehung des Einstellrings 29 bewirkt eine Verdrehung der Lagerhülse 25 insgesamt und über die Mitnehmerzapfen 22 eine Verdrehung des Druckrohres 5 relativ zu der inneren Mantelfläche des Gehäuses 2. Gegenüber dem Innenmantel des Gehäuses 2 ist die Lagerhülse 25 mit Hilfe eines Dichtungsrings 30 und gegenüber dem Außenmantel der Kolbenstange 12 mit Hilfe einer Lippendichtung 31 abgedichtet.

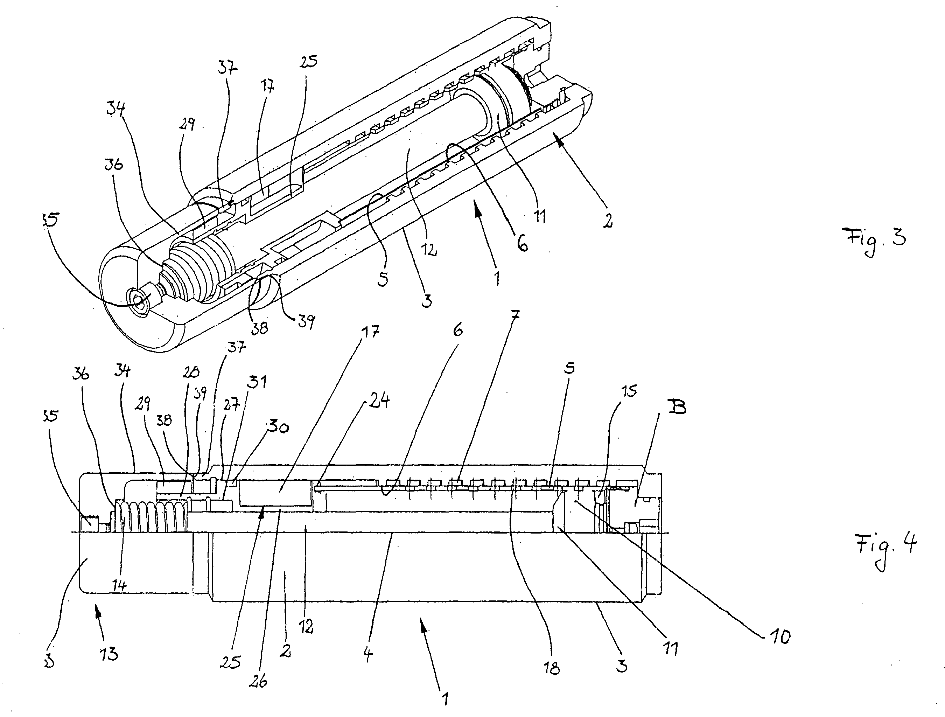

Wenn der Kolben 10 infolge einer Beaufschlagung der Anschlagkappe 13 mit einer Last - ausgehend von der in den Fig. 1 und 2 dargestellten ausgefahrenen Position (Dämpfungsstellung) - weiter in das Gehäuse 2 eindringt, wird der Druckraum 15 verkleinert, wodurch es zu einem Austritt der Hydraulikflüssigkeit durch die Drosselöffnungen 18 des Druckrohres 5 kommt. Die Hydraulikflüssigkeit strömt dabei in die wendelförmige Nut 7, kann jedoch im Bereich der Abflachungen in axiale Richtung zwischen dem Druckrohr 5 und dem Gehäuse 2 auf die Rückseite des Kolbens 10 in den Aufnahmeraum 16 sowie in den Speicherraum 17 gelangen. Aufgrund des Volumens der eindringenden Kolbenstange 12 wird das Volumen des Schaummaterials in dem Speicherraum 17 dabei entsprechend komprimiert.

Die Anschlagkappe 13 besteht aus einem dickwandigen Bodenteil 33 und einem Kragenteil 34 und besitzt somit eine topfförmige Gestalt, wobei der Öffnungsquerschnitt dem Gehäuse 2 des Stoßdämpfers 1 zugewandt ist. Das Bodenteil 33 ist mit einer gestuften zentrischen Bohrung versehen, in die eine Innensechskantschraube 35 eingesetzt ist, die die Anschlagkappe 13 fest mit der Stirnseite der Kolbenstange 12 verbindet. An einer Ringfläche 36 stützt sich die Rückstellfeder 14 an dem Bodenteil 33 der Anschlagkappe 13 ab.

Der Innendurchmesser des Kragenteils 34 ist geringfügig größer als der Außendurchmesser des Einstellrings 29 und entspricht im wesentlichen dem Innendurchmesser des Gehäuses 2 im Bereich des Speicherraums 17. Der Außendurchmesser des Kragenteils 34 der Anschlagkappe 13 entspricht dem Außendurchmesser eines Endrings 37 des Gehäuses 2, in dem kein Gewinde vorhanden ist.

Wenn die Masse bzw. Geschwindigkeit einer auf die Anschlagkappe 13 auffahrenden Last das maximale Energieaufnahmevermögen des Dämpfers übersteigt, schiebt sich das Kragenteil 34 der Anschlagkappe 13 über den Einstellring 29 hinweg. Der maximale Hub des Kolbens 10 wird in dem Moment begrenzt, in dem die Anschlagkappe 13 mit einer ringförmigen Stirnfläche 38 an eine entsprechende ringförmige Stirnfläche 39 des Endrings 37 des Gehäuses 2 anschlägt. Eine Krafteinleitung in den Einstellring 29 und die Lagerhülse 25 findet somit nicht statt.

Sobald die Last nicht mehr auf die Anschlagkappe 13 bzw. den Kolben 10 wirkt, wird die Kolbenstange 12 aufgrund der Kraft der Rückstellfeder 14 wieder aus dem Gehäuse 2 herausgefahren. Dabei ist es zur Begünstigung einer schnellen Ausfahrbewegung nicht erforderlich, daß das Hydrauliköl den umgekehrten Weg wie bei dem zuvor beschriebenen Dämpfungsvorgang zurückströmt, d.h. insbesondere durch die Drosselöffnungen 18 tritt. Vielmehr befindet sich innerhalb des Kolbens 10 ein Rückschlagventil 32, das beim Ausfahren des Kolbens 10 ein ungedrosseltes Rückströmen der Hydraulikflüssigkeit aus dem Aufnahmeraum 16 und dem Speicherraum 17 in den Druckraum 15 ermöglicht. Der Ventilkörper dieses beim Einfahren des Kolbens 10 abdichtenden Rückschlagventils 32 ist in den Figuren nicht näher dargestellt.

Eine Einstellung der Dämpfungscharakteristik erfolgt bei dem Stoßdämpfer 1 durch eine Verdrehung des Druckrohres 5 relativ zu der wendelförmigen Nut 7 in dem Gehäuse 2. Aufgrund der Wendelform kommunizieren die Drosselöffnungen 18, deren Abstand der Mittelachsen voneinander der Steigung der Nut 7 entspricht, mehr oder weniger stark mit dem Öffnungsquerschnitt der Nut 7. Eine optimale Dämpfungswirkung bei kleinen Geschwindigkeiten der auffahrenden Last wird erzielt, wenn die Drosselöffnungen 18 im Bereich der Stege zwischen benachbarten Nutgängen liegen, wobei der Durchmesser der Drosselöffnungen 18 geringfügig kleiner als die Breite der Gehäusestege ist, um auch bei sehr kleinen Geschwindigkeiten eine hinreichende Dämpfung zu erzielen. Hingegen ist es bei hohen Geschwindigkeiten der Last erforderlich, die Drosselöffnungen 18 mehr oder weniger vollständig im Bereich des Öffnungsquerschnitts der Nut 7 anzuordnen, um einen ausreichend schnellen Abfluß der Hydraulikflüssigkeit sicherzustellen.

Die Einstellung des Stoßdämpfers 1 kann sowohl durch Verdrehung des Bodenteils B als auch durch Verdrehung der Lagerhülse 25 über den verdrehfest damit verbundenen Einstellring 29 erfolgen.

## Patentansprüche

1. Stoßdämpfer (1) mit einem Gehäuse (2), in dem ein Kolben (10) axial verschiebbar gelagert und mit einer Kolbenstange (12) verbunden ist, die abgedichtet durch eine Stirnseite des Gehäuses (2) nach außen geführt und an ihrem dem Kolben (10) abgewandten Ende mit einem Anschlagelement versehen ist, gegen das eine abzubremsende Last anschlägt, wodurch der Kolben (10) infolge seiner Verschiebung eine Hydraulikflüssigkeit unter Drosselwirkung verdrängt, wobei der Stoßdämpfer (1) stirnseitig an dem Gehäuse (2) einen Einstellring (29) aufweist **dadurch gekennzeichnet, daß** der maximale Hub des Kolbens (10) durch ein Stützelement begrenzt wird, gegen das das Anschlagelement anschlägt, und dass das Stützelement von einem starren Teil des Gehäuses (2) selbst gebildet wird.

2. Stoßdämpfer nach Anspruch 1, **dadurch gekennzeichnet, daß** das Anschlagelement eine topfförmige Anschlagkappe (13) ist, die mit einer äußeren ringförmigen Stirnfläche (38) an eine entsprechende ringförmige Stirnfläche (39) des Gehäuses (19) anschlägt.

3. Stoßdämpfer nach Anspruch 2, **dadurch gekennzeichnet, daß** der Außendurchmesser der Anschlagkappe (13) dem Außendurchmesser des Gehäuses (2) im Bereich eines der Anschlagkappe zugewandten Endrings (37) entspricht.

4. Stoßdämpfer nach Anspruch 2 oder 3, **dadurch gekennzeichnet, daß** der Innendurchmesser der Anschlagkappe (13) dem Innendurchmesser des Gehäuses (2) im Bereich eines Speicherraums (17) entspricht.

5. Stoßdämpfer nach einem der Ansprüche 1 bis 4, **dadurch gekennzeichnet, daß** die Anschlagkappe (13) in einer Anschlagstellung einen stirnseitig an dem Gehäuse (2) vorstehenden Einstellring (29) aufnimmt, mit dem die Dämpfungskonstante des Stoßdämpfers (1) einstellbar ist.

6. Stoßdämpfer nach einem der Ansprüche 1 bis 5, **dadurch gekennzeichnet, daß** die Anschlagkappe (13) stirnseitig mit der Kolbenstange (12) verschraubt ist und eine Rückstellfeder (14) einerseits abstützt, die andererseits an einer Stirnseite des Gehäuses (2) anliegt und die Kolbenstange (12) von der Anschlagstellung in eine Dämpfungsstellung zurückstellt.

7. Stoßdämpfer nach Anspruch 5 oder 6, **dadurch gekennzeichnet, daß** der Einstellring (29) verdrehfest mit einer Lagerhülse (25) verbunden ist, über die der wirksame Drosselquerschnitt mindestens einer in einem Druckrohr (5) befindlichen Drosselöffnung (18) einstellbar ist.

## Claims

1. Shock absorber (1) with a housing (2), in which a piston (10) is axially displaceably mounted and connected to a piston rod (12) which is guided outwardly in a sealed manner through an end face of the housing (2) and, at its end remote from the piston (10), is provided with a stop element, against which a load to be decelerated strikes, so the piston (10), owing to its displacement, displaces a hydraulic fluid with a throttling effect, the shock absorber (1) having an adjusting ring (29) on the end face of the housing (2), **characterised in that** the maximum stroke of the piston (10) is limited by a support element against which the stop element strikes, and **in that** the support element is formed by a rigid part of the housing (2) itself.

2. Shock absorber according to claim 1, **characterised in that** the stop element is a cup-shaped stop cap (13) which with an outer annular end face (38) strikes against a corresponding annular end face (39) of the housing (19).

3. Shock absorber according to claim 2, **characterised in that** the external diameter of the stop cap (13) corresponds to the external diameter of the housing (2) in the region of an end ring (37) facing the stop cap.

4. Shock absorber according to claim 2 or 3, **characterised in that** the internal diameter of the stop cap (13) corresponds to the internal diameter of the housing (2) in the region of a storage space (17).

5. Shock absorber according to any one of claims 1 to 4, **characterised in that**, in a stop position, the stop cap (13) receives an adjusting ring (29) projecting on the end face of the housing (2), with which adjusting ring (29) the damping coefficient of the shock absorber (1) can be adjusted.

6. Shock absorber according to any one of claims 1 to 5, **characterised in that** the stop cap (13) is screwed to the end face of the piston rod (12) and, on one side, supports a return spring (14) which, on the other side, rests on an end face of the housing (2) and returns the piston rod (12) from the stop position into a damping position.

7. Shock absorber according to claim 5 or 6, **characterised in that** the adjusting ring (29) is non-rotatably connected to a bearing sleeve (25), by way of which the effective throttling cross-section at least of one throttling aperture (18) located in a pressure pipe (5) can be adjusted.

## Revendications

1. Amortisseur (1) de choc comprenant un fourreau (2) dans lequel un piston (10) est monté de manière à pouvoir coulisser axialement et est relié à une tige (2) de piston qui passe à l'extérieur avec étanchéité à travers une face latérale du fourreau (2) et qui à son extrémité éloignée du piston (10) est muni d'un élément de butée contre lequel bute la charge à freiner de sorte que le piston (10) en raison de son coulissement refoule un liquide hydraulique avec effet d'étranglement, l'amortisseur (1) de choc ayant du côté frontal sur le fourreau (2) un anneau (29) de réglage,
**caractérisé en ce que** la course maximum du piston (10) est limitée par un élément d'appui sur lequel bute l'élément de butée et **en ce que** l'élément d'appui est formé soi- même par une partie rigide du fourreau.

2. Amortisseur de choc suivant la revendication 1, **caractérisé en ce que** l'élément de butée est un chapeau (13) de butée en forme de pot qui bute par une surface (38) frontale extérieure annulaire sur une surface (39) frontale annulaire correspondante du fourreau (19).

3. Amortisseur de choc suivant la revendication 2, **caractérisé en ce que** le diamètre extérieur du chapeau (13) de butée correspond au diamètre extérieur du fourreau (2) dans la partie d'un anneau (37) d'extrémité tourné vers le chapeau de butée.

4. Amortisseur de choc suivant la revendication 2 ou 3, **caractérisé en ce que** le diamètre intérieur du chapeau (13) de butée correspondant au diamètre intérieur du fourreau (2) dans la partie d'une chambre (17) de réserve.

5. Amortisseur de choc suivant l'une des revendications 1 à 4, **caractérisé en ce que** le chapeau (13) de butée reçoit dans une position de butée un anneau (29) de réglage qui est en saillie du côté frontal du fourreau (2) et par lequel la constante d'amortissement de l'amortisseur (1) de choc peut être réglée.

6. Amortisseur de choc suivant les revendications 1 à 5, **caractérisé en ce que** le chapeau (13) de butée est vissé du côté frontal à la tige (2) de piston et sert d'appui d'une part à un ressort (14) de rappel qui d'autre part s'applique à un côté frontal du fourreau (2) et ramène la tige (12) de piston de la position de butée à une position d'amortissement.

7. Amortisseur de choc suivant la revendication 5 ou 6, **caractérisé en ce que** l'anneau (29) de réglage est solidaire en rotation d'une douille (25) formant palier par laquelle la section transversale efficace d'étranglement d'au moins une ouverture (12) d'étranglement se trouvant dans un tube (5) de pression peut être réglée.
